Europäisches Patentamt

European Patent Office

Office européen des brevets

(11) Veröffentlichungsnummer: **0 493 825 A2**

## (12) EUROPÄISCHE PATENTANMELDUNG

(21) Anmeldenummer: **91122354.3**

(22) Anmeldetag: **30.12.91**

(51) Int. Cl.5: **G01F 1/84**

(30) Priorität: **02.01.91 DE 4100006**

(43) Veröffentlichungstag der Anmeldung:
**08.07.92 Patentblatt 92/28**

(84) Benannte Vertragsstaaten:
**BE CH DE FR GB LI NL**

(71) Anmelder: **Zaschel, Jörg, Dr.**
**Agnes-Miegel-Strasse 21**
**W-7410 Reutlingen(DE)**

(72) Erfinder: **Zaschel, Jörg, Dr.**
**Agnes-Miegel-Strasse 21**
**W-7410 Reutlingen(DE)**

(54) **Universelles Massestrommessgerät für Flüssigkeiten, Gase und Feststoffe.**

(57) Dieses Massestrommeßgerät arbeitet nach dem Coriolisverfahren und enthält ein Meßrohr, dessen Wandstärke und Durchmesser etwa der angeschlossenen Rohrleitung entsprechen. Das Meßrohr ist frei beweglich derart gelagert, daß es auch außerhalb einer Eigenresonanz in Drehbewegung mit für die Meßwertgewinnung günstiger Winkelgeschwindigkeit versetzt werden kann.

Das störbehaftete Rohmeßsignal wird mit Hilfe eines Schätzalgorithmus ausgewertet, indem das Rohmeßsignal z im Vergleicher [20] mit einem an f anstehenden, aus x^ berechneten Schätzwert z^ verglichen wird, die daraus entstehende Abweichung #z über b dem Kalmanfilter [21] zugeführt wird und das an c anstehende Filterergebnis K[#z] mit dem an e anstehenden und im Umwerter [22] gebildeten Produkt Fx^ verknüpft wird. Gleichzeitig wird im Umwerter [23] ein neuer Schätzwert z^ berechnet und an f bereitgestellt. Der neueste Schätzwert X^ steht am Ausgang A als Meßwert fortlaufend an.

Fig. 3

Die Erfindung betrifft ein Massestrommeßgerät für alle Arten von strömenden Stoffen, das nach dem Coriolisprinzip die Masse direkt und kontinuierlich unabhängig von den Stoffeigenschaften mißt, mit einem Leitungseinlauf, mit einem den strömenden Stoff führenden, starren Meßrohr und flexiblen Anschlußelementen, mit einem Leitungsauslauf, mit einem die Leitung in Drehschwingungen versetzenden Antrieb, mit einer Corioliskräfte erfassenden Meßeinrichtung und mit einer die Corioliskräfte von unvermeidlichen Störeinflüssen trennenden Signalverarbeitung.

Massedurchflußmesser für strömende Stoffe, die nach dem Coriolis-Prinzip arbeiten, sind in verschiedenen Ausführungen bekannt (siehe z.B. die Offenlegungsschriften DE 1 473 164, 1 498 446, 2 629 833, 2 822 087, 2 833 037, 2 938 498, 3 007 361, 3 329 544, 3 443 234, 3 503 841, 3 505 166, 3 526 297, 3 707 777, 3 916 285 und 4 016 907 sowie EP 0 083 144, 0 109 218, 0 119 638, 0 185 709, 0 196 150, 0 210 308, 0 212 782, 0 235 274, 0 239 679, 0 243 468, 0 244 692, 0 250 706, 0 271 605, 0 275 367, 0 282 552 sowie die Patentschriften US 3,927,565, 4,491,009, 4,628,744 und 4,666,421). Solche Massedurchflußmeßgeräte werden in der Praxis zunehmend verwendet.

Die seit mehr als zehn Jahren verwendeten Massedurchflußmeßgeräte, die nach dem Coriolis-Prinzip arbeitenn, haben in eine auf verschiedene Weise gekrümmtes Meßrohr, das mehr oder weniger fest eingespannt ist und in Resonanzschwingungen versetzt wird. Dazu muß ein bestimmtes Verhältnis zwischen dem Durchfluß und den mechanischen Abmessungen eingehalten werden, was zu relativ dünnen Meßrohren mit der Folge eines gewissen Sicherheitsrisikos, kleinen Rohrdurchmessern mit der Folge hohen Druckverlusts, und großen Einbaumaßen führt, wodurch diese Geräte außer für Flüssigkeiten nur in Ausnahmefällen für Gase und überhaupt nicht für Schüttgüter verwendbar sind.

Massedurchflußmeßgeräte, die mit einem fest eingespannten Meßrohr in Resonanz arbeiten, müssen auch mit außergewöhnlich hoher Präzision und damit hohen Kosten gefertigt werden, um die vom durchströmenden Stoff verursachten, konstruktionsbedingt sehr kleinen Coriolisbeschleunigungen von den einsatzbedingt vorhandenen Störschwingungen im Hinblick auf die in der Praxis geforderte Meßgenauigkeit ausreichend unterscheiden zu können.

Solche Störschwingungen lassen sich aber auch mit Hilfe von sogenannten Beobachtersystemen unterdrücken, wie sie aus anderen Gebieten bekannt sind (Isermann, R.: Identifikation und Parameterschätzung dynamischer Prozesse, VDI-Z 116, 1974, Nr.14. Entenmann, W.: Optimierungsverfahren, Hüthig-Verlag, Heidelberg, 1976).

Die Erfindung, wie sie in den Ansprüchen gekennzeichnet ist, löst die Aufgabe, ein Massestrommeßgerät zu schaffen, bei dem Wandstärke und Durchmesser des Meßrohrs etwa wie in üblichen Rohrleitungen ausgeführt sind und das mit einer nicht an Schwingungsresonanz gebundenen, sondern an die gewünschten Eigenschaften angepaßten Drehschwingung angetrieben wird sowie eine hohe Meßgenauigkeit aufweist.

Die durch das erfindungsgemäße Massestrommeßgerät erreichten Vorteile liegen im wesentlichen darin, daß es nur ein Meßrohr hat, daß sein Meßrohr denselben Belastungen widerstehen kann wie die angeschlossene Rohrleitung, daß es klein baut, daß es mit normalen Fertigungsmitteln kostengünstig hergestellt werden kann, daß es etwa den Druckverlust wie die angeschlossenen Rohrleitung hat, daß es auch für große Massenströme ausgelegt werden kann und daß es gleichermaßen für Flüssigkeiten, Gase und Feststoffe verwendet werden kann.

Im folgenden wird die Erfindung anhand von lediglich einen Ausführungsweg darstellenden Zeichnungen erläutert.

Abbildung 1 zeigt ein erfindungsgemäßes Massestrommeßgerät im Querschnitt.

Abbildung 2 zeigt das Blockschaltbild der Signalverarbeitungselektronik.

Abbildung 3 zeigt den zugehörigen Signalflußplan der Meßwertverarbeitung.

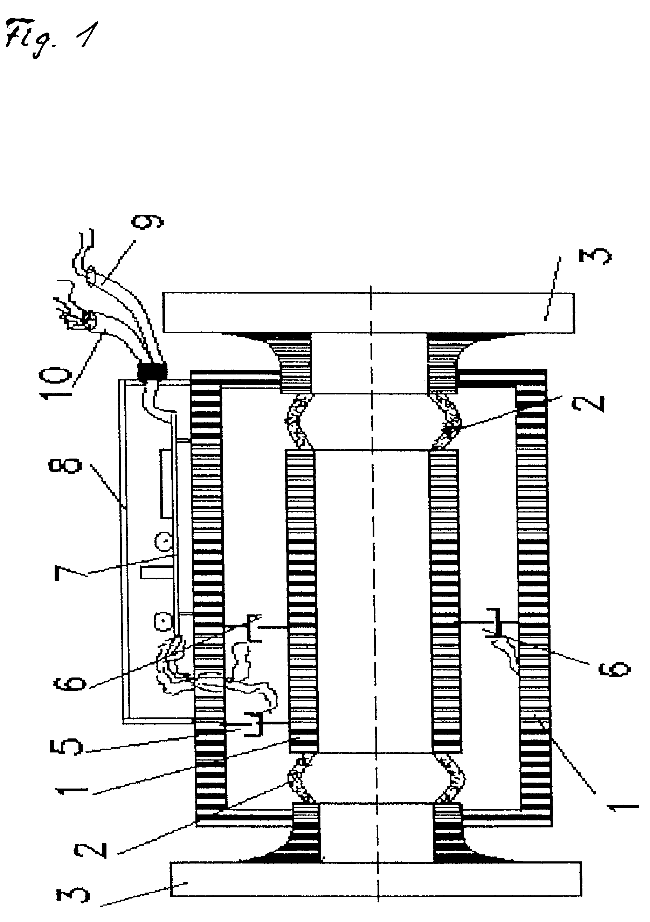

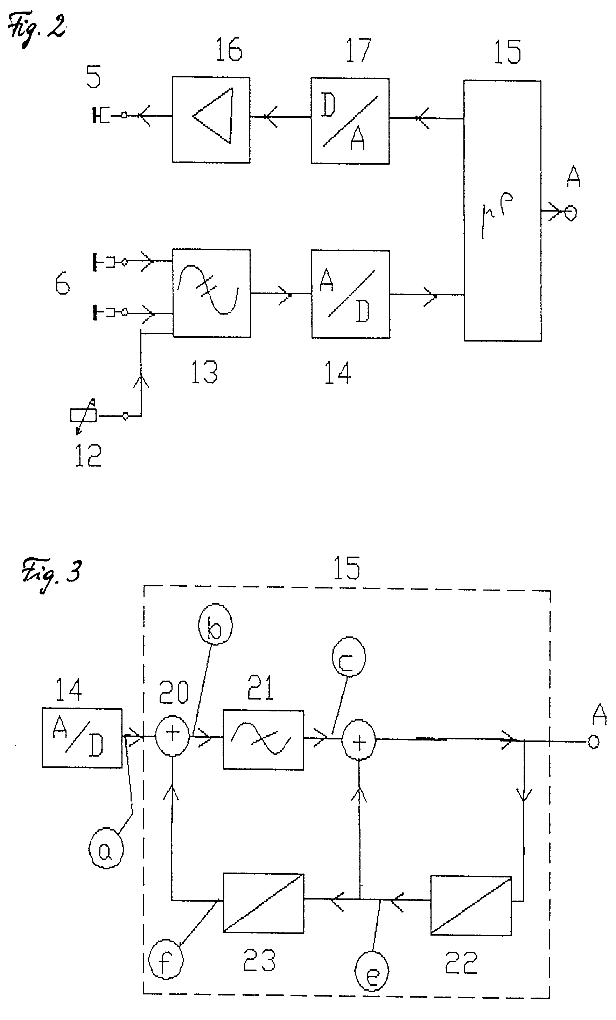

Das in den Abbildungen dargestellte Massestrommeßgerät enthält ein vorzugsweise gerades Meßrohr [1], das mittels metallischen flexiblen Wellschläuchen [2] an die Ein-/Auslaufflansche [3] angeschlossen ist, das gegen das Gehäuse [4] durch einen als Tauchspule ausgebildeten Antriebsvorrichtung [5] in eine Drehbewegung versetzt wird und von dem der Corioliseffekt als Funktion des Massedurchflusses mittels der als Tauchspulen ausgeführten Sensoren [6] abgegriffen wird sowie die Signal- und Meßwertverarbeitungselektronik [7] mit Gehäuse [8] und elektrischen Ein- und Ausgängen [9] bzw. [10]. (Meßrohr [1], Wellschläuche [2], Gehäuse [4], Antriebsvorrichtung [5] und Sensoren [6] bilden zusammen den eigentlichen Corioliswandler).

Erfindungsgemäß weist das Meßrohr [1] eine üblichen Prozeßrohrleitungen entsprechende Wandstärke auf, ist in den flexiblen Wellschläuchen [2] derart nachgiebig gelagert, daß es in beliebiger Richtung und mit beliebiger Geschwindigkeit bewegt werden kann, und wird durch ein Servoprinzip mittels dem Antriebsvorrichtung [5], den Sensoren [6] und der Elektronik [7] in Bewegung versetzt. Außerdem werden eine Zustandsmatrix F und eine Übertragungsmatrix H des Corioliswandlers aufgestellt, ihre Parameter in Kalibrierläufen ermittelt, und im Mikroprozessor [15] gespeichert. Schließlich werden die an den Sensoren [6] abgegriffenen Meßsignale, vorzugsweise zusammen mit einem vom Sensor [12] erfaßten Korrektursignal als Rohmeßsignal z, das den Massedurchfluß x und die vom Corioliswandler selbst erzeugten Störungen v enthält sowie der Beziehung

$$z = Hx + v$$

gehorcht, über den Analog-Digital-Wandler [14] dem Eingang a des Mikroprozessors [15] zugeführt, in dem ein Algorithmus derart abläuft, daß fortlaufend ein Schätzwert x^ für den wahren Massedurchfluß x ermittelt wird, wobei der Massedurchfluß x als Zustandsgröße des Corioliswandlers mit Hilfe seiner Ableitung nach der Zeit

$$x° = Fx + Gw$$

definiert ist. Hierin sind w die vom Meßprozeß auf den Corioliswandler einwirkenden Störungen und G die Übertragungsmatrix für diese Störungen. Der Schätzwert x^ steht am Ausgang A des Mikroprozessors [15] fortlaufend zur Verfügung. Er wird gebildet, indem das Rohmeßsignal z im Vergleicher [20] mit einem an f anstehenden, aus x^ berechneten Schätzwert z^ verglichen wird, die daraus entstehende Abweichung #z über b dem Kalmanfilter [21] zugeführt wird und das an c anstehende Filterergebnis K[#z] mit dem an e anstehenden und im Umwerter [22] gebildeten Produkt Fx^ verknüpft wird. Gleichzeitig wird im Umwerter [23] ein neuer Schätzwert z^ berechnet und an f bereitgestellt. Der Mikroprozessor [15] erzeugt außerdem das Antriebssignal, das über den Digital-Analog-Wandler [17] und den Verstärker [16] der Antriebsvorrichtung [5] zugeführt wird.

Weitere vorteilhafte Ausbildungen betreffen die Lagerung des Meßrohrs, die anstatt durch die flexiblen Wellschläuche selbst mittels eines Gelenks an einer geeigneten Stelle entlang des Meßrohrs oder durch berührungsfreie Lagerung mittels eines Elektromagneten durch Ausnutzung von Magnetkräften oder von Wirbelströmen erfolgt.

Weitere vorteilhafte Ausbildungen betreffen auch die Antriebsvorrichtung [5], die anstatt als Tauchspule in Form eines das ganze Meßrohr umgebenden elektrischen oder magnetischen Kraftfelds oder mittels im Meßrohr gelagerter Wirbelkörper durch die Strömung selbst realisiert wird.

Weitere vorteilhafte Ausbildungen betreffen auch die Sensoren [6], die anstatt in Form von Tauchspulen als kapazitive, optische oder induktive Sensoren oder in Form von Dehnungsmeßstreifen oder Piezoelementen ausgeführt werden.

Schließlich besteht noch eine vorteilhafte Ausführung darin, das Rückstellsignal des Servoantriebs selbst unmittelbar als Rohmeßsignal zu verwenden.

**Patentansprüche**

1. Massestrommeßgerät für alle strömenden Meßstoffe, das nach dem Coriolis-Prinzip arbeitet, mit einem Meßrohr, das über flexible Verbindungstücke an eine Massestromleitung angeschlossen ist und das mit einer Antriebsvorrichtung und Sensoren versehen ist, dadurch gekennzeichnet, daß das Meßrohr in beliebiger Richtung verschwenk- und /oder drehbar gelagert ist, von einer Antriebsvorrichtung unter Ausnutzung des Servoprinzips in eine von Eigenresonanzen unabhängige Bewegung versetzt wird und die Rohmeßsignale von den Sensoren durch ein Beobachtersystem mit der üblichen Genauigkeit ausgewertet werden, indem die Übertragungs- und Zustandsmatrizen des Corioliswandlers ermittelt werden, die Abweichung zwischen dem Rohmeßsignal und einem im System berechneten Schätzwert fortlaufend berechnet wird, diese Abweichung einer Filterung mit einem optimierenden Algorithmus unterworfen wird und aus dem Ergebnis der Filterung ein neuer Schätzwert für den Systemzustand gebildet wird, der dem wirklichen Massestrom entspricht.

2. Massestrommeßgerät nach Anspruch 1, dadurch gekennzeichnet, daß außer dem Schätzwert für den wirklichen Massestrom noch ein Eingangssignal für die Antriebsvorrichtung derart erzeugt wird, daß Corioliswandler und Auswerteeinrichtung zusammen einen selbstoptimierenden Regelkreis bilden.

3. Massestrommeßgerät nach Anspruch 1 oder Anspruch 2, dadurch gekennzeichnet, daß mindestens ein zusätzlicher Sensor in die Zustandsschätzung einbezogen wird.

4. Massestrommeßgerät nach Anpruch 1 oder Anspruch 2, bei dem anstelle der Signale von den Sensoren das Nachstellsignal des Servoantriebs unmittelbar als Rohmeßsignal verwendet wird.

5. Massestrommeßgerät nach Anspruch 1 oder Anspruch 2, dadurch gekennzeichnet, daß das Meßrohr etwa dieselbe Wandstärke und denselben Durchmesser wie die angeschlossene Rohrleitung hat und berührungslos in einem Magnetfeld gelagert ist.

6. Massestrommeßgerät nach Anspruch 1 oder Anspruch 2, dadurch gekennzeichnet, daß eine Antriebsvorrichtung vorgesehen ist, die berührungslos, z. B. elektromagnetisch, kapazitiv oder über Wirbelströme mit dem Meßrohr gekoppelt ist.

7. Massestrommeßgerät nach Anspruch 1 oder Anspruch 2, dadurch gekennzeichnet, daß die Antriebsvorrichtung Piezoelemente aufweist.

8. Massestrommeßgerät nach Anspruch 1 oder Anspruch 2, dadurch gekennzeichnet, daß die Antriebsvorrichtung von dem strömenden Medium beaufschlagte Wirbelkörper aufweist.

Fig. 1

**Fig. 2**

**Fig. 3**